# EUROPÄISCHE PATENTSCHRIFT

(11) **EP 3 659 113 B1**
(45) Veröffentlichungstag und Bekanntmachung des Hinweises auf die Patenterteilung: **22.06.2022**
(21) Anmeldenummer: 18769100.1
(22) Anmeldetag: 04.09.2018
(51) Int. Cl.: G06V 20/10, G06V 20/64, G06T 7/70, G06T 7/73, G06T 7/00, G06T 7/246

(54) **ERKENNUNGSSYSTEM, ARBEITSVERFAHREN UND TRAININGSVERFAHREN ZUM ERZEUGEN EINES 3D-MODELLS MIT REFERENZDATEN**
DETECTION SYSTEM, WORKING METHOD AND TRAINING METHOD FOR GENERATING A 3D MODEL WITH REFERENCE DATA
SYSTÈME DE RECONNAISSANCE, PROCÉDÉ DE TRAVAIL ET PROCÉDÉ D'APPRENTISSAGE POUR GÉNÉRER UN MODÈLE 3D AVEC DES DONNÉES DE RÉFÉRENCE

(30) Priorität: 26.09.2017 DE 102017217063
(43) Veröffentlichungstag der Anmeldung: 03.06.2020
(73) Patentinhaber: Siemens Mobility GmbH, 81739 München (DE)
(72) Erfinder: GU, Yecheng, 12489 Berlin (DE); HOPPE, Christof, 48147 Münster (DE); KLUCKNER, Stefan, 12487 Berlin (DE); REINBOTHE, Christoph Konrad, 15366 Hoppegarten (DE); TETZLAFF, Lukas, 12435 Berlin (DE)
(86) Internationale Anmeldenummer: PCT/EP2018/073687
(87) Internationale Veröffentlichungsnummer: WO 2019/063246

(56) Entgegenhaltungen:
- US-A1- 2010 045 701
- US-A1- 2011 279 697
- US-A1- 2014 132 729
- JURI PLATONOV ET AL: "A mobile markerless AR system for maintenance and repair", MIXED AND AUGMENTED REALITY, 2006. ISMAR 2006. IEEE/ACM INTERNATIONAL SYMPOSIUM ON, IEEE, PI, 22. Oktober 2006 (2006-10-22), Seiten 105-108, XP058378969, DOI: 10.1109/ISMAR.2006.297800 ISBN: 978-1-4244-0650-0
- HARALICK R M ET AL: "Analysis and solutions of the three point perspective pose estimation problem", PROCEEDINGS OF THE COMPUTER SOCIETY CONFERENCE ON COMPUTER VISION AND PATTERN RECOGNITION. LAHAINA, MAUI, HAWAII, JUNE 3 - 6, 19; [PROCEEDINGS OF THE COMPUTER SOCIETY CONFERENCE ON COMPUTER VISION AND PATTERN RECOGNITION], LOS ALAMITOS, IEEE. COMP. S, Bd. -, 3. Juni 1991 (1991-06-03), Seiten 592-598, XP010023268, DOI: 10.1109/CVPR.1991.139759 ISBN: 978-0-8186-2148-2

## Beschreibung

Die vorliegende Erfindung betrifft ein Erkennungssystem und ein Arbeitsverfahren für ein Erkennungssystem Technische Produkte wie beispielsweise Maschinen, Fahrzeuge, Flugzeuge, Schiffe, etc., bestehen oftmals aus einer Vielzahl von Bauteilen. Während einer Verwendung des technischen Produkts kommt es vor, dass Teile der Anordnung ausfallen, beschädigt werden, oder aufgrund von sonstiger Abnutzung ein Austausch einzelner Bauteile des Produkts notwendig wird. Für technische Produkte mit einer Vielzahl von Bauteilen in verschiedensten Größen stellt es eine Herausforderung dar, ein spezielles Bauteil bei einer Wartung des Produkts zu identifizieren. Hinzu kommt, dass es schwierig sein kann, ähnliche Teile voneinander zu unterscheiden. Außerdem wird eine Bauteilerkennung zusätzlich dadurch erschwert, dass beispielsweise bewegliche Bauteile in unterschiedlichen Zuständen in dem Produkt vorhanden sein können, oder aufgrund von Verschmutzung und/oder Abnutzung nur noch schwer erkennbar sind. Die Offenlegungsschrift US 2010/045701 A1 offenbart ein System und ein Verfahren zur Verbesserung einer Augmented Reality-Umgebung. Dazu wird eine Pose einer Kamera mittels Abgleich von natürlichen und synthetischen Bildmarken bestimmt. Der Aufsatz "A mobile markerless AR system for maintenance and repair" von JURI PLATONOV ET AL, MIXED AND AUGMENTED REALITY, IEEE/ACM INTERNATIONAL SYMPOSIUM ON, IEEE, PI, 22.

Oktober 2006, Seiten 105-108, beschreibt eine Lösung für ein Augmented Reality-basierte Reperaturanweisungen mit Markierungslosem CAD-basierten Tracking.

Ein Trainingsverfahren zum Erzeugen eines 3D-Modells mit Referenzbilder ist aus Dokument US 2014/132729 A1 bekannt.

Eine Aufgabe der vorliegenden Erfindung ist es, ein Arbeitsverfahren für ein Erkennungssystem zu beschreiben, welches ein zuverlässiges Erkennen eines Bauteils einer Bauteilanordnung ermöglicht. Ferner ist es eine Aufgabe der Erfindung, ein Erkennungssystem für ein derartiges Arbeitsverfahren zu beschreiben.

In einem ersten Aspekt wird die oben genannte Aufgabe durch ein Arbeitsverfahren gelöst, welches die folgenden Schritte umfasst:
- Bestimmen einer Ausgangspose eines Aufnahmegeräts relativ zu einem 3D-Modell einer Bauteilanordnung, wobei bei der Bestimmung der Ausgangspose ein erster Bildausschnitt mit dem Aufnahmegerät aufgenommen wird und mit wenigstens einem in dem 3D-Modell hinterlegten Referenzbild abgeglichen wird,
- Erzeugen eines Pose-Tracking-Signals, ausgehend von der Ausgangspose, basierend auf erfassten Translations- und/oder Rotationsbewegungen des Aufnahmegeräts,
- Aufnehmen eines zweiten Bildausschnitts, wobei der zweite Bildausschnitt wenigstens ein zu erkennendes Bauteil der Bauteilanordnung umfasst,
- Bestimmen einer ersten Pose des Aufnahmegeräts relativ zu dem 3D-Modell, basierend auf dem Pose-Tracking-Signal,
- Bestimmen einer zweiten Pose des Aufnahmegeräts relativ zu dem 3D-Modell basierend auf einem Abgleich des zweiten Bildausschnitts mit Modelldaten des 3D-Modells, und
- Auswerten wenigstens einer Bauteilinformation des wenigstens einen zu erkennenden Bauteils, basierend auf der ersten Pose und der zweiten Pose, wenn der Abgleich des zweiten Bildausschnitts mit den Modelldaten erfolgreich ist. Vorteilhaft hierbei ist es, dass eine geringe Fehleranfälligkeit bei einer Erkennung eines zu erkennenden Bauteils gewährleistet wird. So können beispielsweise Bauteile, die von außen betrachtet gleich aussehen, sich in ihrer Funktion jedoch unterscheiden und an unterschiedlichen Orten der Bauteilanordnung angeordnet sind, voneinander unterschieden werden. Eine derartige Unterscheidung wäre allein mit dem Abgleich des zweiten Bildausschnitt mit den Modelldaten nicht möglich. In diesem Fall ist es vorteilhaft, die Auswertung wenigstens einer Bauteilinformation des wenigstens einen zu erkennenden Bauteils zusätzlich basierend auf der ersten Pose auszuwerten. Die Ausgangspose, bzw. erste und zweite Pose umfassen Informationen zu einer Position des Aufnahmegeräts relativ zu der Bauteilanordnung und einer Blickrichtung des Aufnahmegeräts auf die Bauteilanordnung.

Erfindungsgemäß umfasst das Arbeitsverfahren ein Erzeugen eines Warnsignals, wenn der Abgleich des zweiten Bildausschnitts mit den Modelldaten zumindest teilweise nicht erfolgreich ist.

Auf diese Weise wird einem Nutzer signalisiert, dass eine Abweichung zwischen der realen Szene des technischen Produkts und dem 3D-Modell des technischen Produkts vorliegt. In diesem Fall kann die erste Pose dazu verwendet werden, einen das zu erkennende Bauteil umfassenden Bereich zu verifizieren, auch wenn der zweite Bildausschnitt mit den Modelldaten nur teilweise, insbesondere nicht ausreichend für ein Bestimmen der zweiten Pose, übereinstimmt. In diesem Fall ist es vorteilhaft, einem Nutzer ein Warnsignal anzuzeigen, dass beispielsweise eine Verschmutzung, ein Defekt oder eine sonstige Abweichung zwischen der Realszene und dem 3D-Modell vorliegen, welche das Bestimmen der zweiten Pose beeinträchtigt oder verhindert. Zusätzlich ist es in diesem Fall auch möglich, Bauteilinformationen basierend nur auf der ersten Pose anzuzeigen. Vorteilhaft ist es in einem solchen Fall, dem Nutzer derartig gewonnene Bauteilinformationen zusammen mit dem Warnhinweis anzuzeigen.

In wenigstens einer Ausgestaltung umfasst das Bestimmen der zweiten Pose ferner ein Bestimmen eines Teilbereichs des 3D-Modells basierend auf der ersten Pose.

Ein Vorteil hierbei ist es, dass das Bestimmen der zweiten Pose basierend auf einem Abgleich des zweiten Bildausschnitts mit Modelldaten des 3D-Modells schneller durchführbar ist. Kann die Position des Aufnahmegeräts einem bestimmten Teilbereich des 3D-Modells basierend auf der ersten Pose zugeordnet werden, so genügt es, zur Bestimmung der zweiten Pose, den zweiten Bildausschnitt lediglich mit Modelldaten des Teilbereichs des 3D-Modells abzugleichen. Ein Suchbereich für eine Übereinstimmung der Modelldaten mit dem zweiten Bildausschnitt wird so stark eingeschränkt. Dies trägt zu einer wesentlichen Beschleunigung des Abgleichens des zweiten Bildausschnitts mit den Modelldaten bei. Alternativ oder zusätzlich wird auch eine mögliche Blickrichtung auf das 3D-Modell basierend auf der ersten Pose eingeschränkt. Der zweite Bildausschnitt muss dann nur mit Modelldaten des 3D-Modells abgeglichen werden, die der Blickrichtung der ersten Pose entsprechen. Dies trägt ebenfalls zu einer massiven Einschränkung des Suchraums und somit zu einer starken Beschleunigung des Suchverfahrens bei.

In wenigstens einer Ausgestaltung umfasst das Arbeitsverfahren ferner die Schritte:
- Rendern einer ersten Teilansicht des 3D-Modells basierend auf der ersten Pose,
- Rendern einer zweiten Teilansicht des 3D-Modells basierend auf der zweiten Pose,
- Abgleichen der ersten gerenderten Teilansicht mit der zweiten gerenderten Teilansicht,
- Erzeugen eines weiteren Warnsignals, wenn ein Abgleich der ersten und der zweiten gerenderten Teilansicht zumindest teilweise nicht erfolgreich ist.

Der Abgleich der gerenderten Teilansichten erfolgt beispielsweise im Geometrieraum, das heißt es findet ein Abgleich zweier 3D-Modelle statt. Unterschiede in der Geometrie können somit identifiziert und extrahiert werden. Globale Unterschiede deuten darauf hin, dass die Erkennung der ersten und/oder der zweiten Pose fehlgeschlagen ist. Ein entsprechendes Feedback wird einem Nutzer als Warnsignal mitgeteilt.

In wenigstens einer vorteilhaften Ausgestaltung wird beim Aufnehmen des ersten Bildausschnitts ein Farbbild einer eindeutigen, vorbekannten Szene der Bauteilanordnung aufgenommen und/oder ein an einer eindeutigen Stelle der Bauteilanordnung angebrachter Barcode und/oder QR-Code gescannt. Das Referenzbild umfasst eine entsprechende Referenzbildinformation und/oder Referenz-Barcode-Information und/oder QR-Code-Information.

Ein Vorteil hierbei ist es, dass ein Nutzer derartige Bildausschnitte einfach auffinden kann. Vorbekannte Szenen der Bauteilanordnung, die einen ersten Bildausschnitt darstellen, sind vorzugsweise Teile der Bauteilanordnung, die keinem Verschleiß, Verschmutzen oder Ähnlichem ausgesetzt sind.

In wenigstens einer Ausgestaltung wird beim Bestimmen der Ausgangspose des Aufnahmegeräts eine geometrische Transformation zwischen dem ersten Bildausschnitt und dem Referenzbild berechnet.

Die geometrische Transformation umfasst beispielsweise eine Homographie oder eine relative Poseberechnung. Die geometrische Transformation bestimmt einen Unterschied zwischen einer Pose, aus der der erste Bildausschnitt aufgenommen wurde und einer Pose, aus der das Referenzbild aufgenommen wurde. Dies trägt dazu bei, dass die Ausgangspose genauer bestimmbar ist. Des Weiteren ist die Berechnung der geometrischen Transformation vorteilhaft, da Ungenauigkeiten bei dem Aufnehmen des ersten Bildausschnitts ausgeglichen werden können. Ein aufgenommener erster Bildausschnitt kann beispielsweise auch dann zur Bestimmung der Ausgangspose verwendet werden, wenn der erste Bildausschnitt beispielsweise in einem Blickwinkel und/oder einer Distanz zur vorbekannten Szene von dem Referenzbild abweicht.

In wenigstens einer Ausgestaltung wird mit dem ersten Bildausschnitt zusätzlich ein Produkttyp eines die Bauteilanordnung umfassenden Produkts identifiziert.

Dies ermöglicht es, ein entsprechendes 3D-Modell beispielsweise in einen Speicher zu laden.

In einem zweiten Aspekt wird die oben genannte Aufgabe durch ein Erkennungssystem, umfassend wenigstens ein Aufnahmegerät, ein Pose-Tracking-Vorrichtung und wenigstens eine Datenverarbeitungsvorrichtung gelöst. Das Aufnahmegerät ist dazu eingerichtet, einen ersten Bildausschnitt aufzunehmen. Die wenigstens eine Datenverarbeitungsvorrichtung ist dazu eingerichtet, eine Ausgangspose des wenigstens einen Aufnahmegeräts zu bestimmen, wobei bei der Bestimmung der Ausgangspose der erste Bildausschnitt mit wenigstens einem in dem 3D-Modell hinterlegten Referenzbild abgeglichen wird. Die Pose-Tracking-Vorrichtung ist dazu eingerichtet, ein Pose-Tracking-Signal, ausgehend von der Ausgangspose, basierend auf erfassten Translations- und/oder Rotationsbewegungen des Aufnahmegeräts zu erzeugen. Das wenigstens eine Aufnahmegerät ist ferner dazu eingerichtet, einen zweiten Bildausschnitt aufzunehmen, wobei der zweite Bildausschnitt wenigstens ein zu erkennendes Bauteil der Bauteilanordnung umfasst. Die wenigstens eine Datenverarbeitungsvorrichtung ist ferner dazu eingerichtet, eine erste Pose des Aufnahmegeräts relativ zu dem 3D-Modell, basierend auf dem Pose-Tracking-Signal zu bestimmen. Die wenigstens eine Datenverarbeitungsvorrichtung ist ferner dazu eingerichtet, eine zweite Pose des Aufnahmegeräts relativ zu dem 3D-Modell basierend auf einem Abgleich des zweiten Bildausschnitts mit Modelldaten des 3D-Modells zu bestimmen. Die wenigstens eine Datenverarbeitungsvorrichtung ist ferner dazu eingerichtet, wenigstens eine Bauteilinformation des wenigstens einen zu erkennenden Bauteils, basierend auf der ersten Pose und der zweiten Pose auszuwerten, wenn der Abgleich des zweiten Bildausschnitt mit den Modelldaten erfolgreich ist.

Ein Vorteil hierbei ist es, dass eine hohe Zuverlässigkeit bei der Auswertung von Bauteilinformationen des wenigstens einen zu erkennenden Bauteils und/oder geringer Zeitaufwand für die Auswertung benötigt wird. Das Bestimmen einer ersten und einer zweiten Pose macht es möglich, unabhängig voneinander bestimmten Posen miteinander zu vergleichen und besagte Bauteilinformationen nur dann als zuverlässig zu kennzeichnen, wenn eine Übereinstimmung der beiden Posen vorliegt. Alternativ oder zusätzlich wird ein Suchbereich für die Bestimmung der zweiten Pose, basierend auf der ersten Pose eingeschränkt. Dies trägt dazu bei, dass die Auswertung der Bauteilinformationen und das Erkennen eines Bauteils mit geringem Zeitaufwand durchführbar ist. Des Weiteren ist es vorteilhaft, dass die Bestimmung der ersten Pose unabhängig von globalen Ortungssystemen, wie beispielsweise GPS, durchführbar ist, da diese beispielsweise in geschlossenen Räumen nicht funktionieren.

Erfindungsgemäß umfasst das Erkennungssystem ferner eine Anzeigevorrichtung, die dazu eingerichtet ist, wenigstens eine Bauteilinformation auszugeben, wenn der Abgleich des zweiten Bildausschnitt mit den Modelldaten erfolgreich ist. Ferner ist die Anzeigevorrichtung dazu eingerichtet, ein Warnsignal anzuzeigen, wenn der Abgleich des zweiten Bildausschnitts mit den Modelldaten zumindest teilweise nicht erfolgreich ist.

Dies ermöglicht es, einem Nutzer des Erkennungssystems die Bauteilinformation bei einem erfolgreichen Abgleich bildlich darzustellen. Beispielsweise wird die Bauteilinformation, die aus in dem 3D-Modell gespeicherten Daten gewonnen wird, kombiniert mit dem zweiten Bildausschnitt angezeigt. So kann der Nutzer unmittelbar die reale Szene, die in dem zweiten Bildausschnitt abgebildet wird mit den Bauteilinformationen des 3D-Modells vergleichen. Des Weiteren ist es so möglich, dass dem Nutzer beispielsweise Differenzen zwischen der realen Szene und dem 3D-Modell signalisiert werden.

In wenigstens einer Ausgestaltung umfasst die Pose-Tracking-Vorrichtung eine inertiale Messeinheit zur Erzeugung des Pose-Tracking-Signals, wobei die inertiale Messeinheit in dem Aufnahmegerät integriert ist.

Dies ermöglicht es, dass das Pose-Tracking-Signal und somit die erste Pose des Aufnahmegeräts zuverlässig von dem ersten Aufnahmegerät selbst erzeugt werden kann, ohne auf zusätzliche, externe Produkte angewiesen zu sein.

Ein Trainingsverfahren zum Erzeugen eines 3D-Modells mit Referenzdaten, insbesondere für ein Erkennungssystem gemäß dem zweiten Aspekt, umfasst die Schritte:
- Aufnehmen, mit einem Aufnahmegerät, wenigstens eines Referenzbildes der Bauteilanordnung, und
- Verknüpfen des wenigstens einen Referenzbildes mit dem 3D-Modell, sodass dem das wenigstens eine Referenzbild aufnehmende Aufnahmegerät eine Referenzpose in dem 3D-Modell zugeordnet wird, wobei bei dem Verknüpfen wenigstens drei Merkmale des Referenzbildes wenigstens drei entsprechenden Merkmalen des 3D-Modells zugeordnet werden.

Die Referenzdaten, die dem 3D-Modell zugeordnet sind, umfassen dann die Referenzbilder und die Referenzpose, basierend auf der Zuordnung der wenigstens drei Merkmale. Dies ermöglicht es, dass Referenzbilder bei Bedarf auch nachträglich mit dem 3D-Modell verknüpfbar sind. Dies trägt dazu bei, dass bei technischen Produkten, die beispielsweise zu einem späteren Zeitpunkt so verändert werden, dass ursprüngliche Referenzbilder nicht mehr gültig sind, die Referenzbilder angepasst werden können.

Weitere vorteilhafte Ausgestaltungen sind in den angehängten Ansprüchen sowie der nachfolgenden Beschreibung von Ausführungsbeispielen offenbart. Die Ausführungsbeispiele werden anhand der angehängten Figuren beschrieben.

In den Figuren zeigen:
- Figuren 1 - 3: Flussdiagramme eines Arbeitsverfahrens für ein Erkennungssystem gemäß einer Ausgestaltung der Erfindung,
- Figur 4: ein Flussdiagramm eines Trainingsverfahrens zum Erzeugen eines 3D-Modells mit Referenzdaten gemäß einem Ausführungsbeispiel der Erfindung, und
- Figur 5: eine schematische Anordnung eines Erkennungssystems gemäß einem Ausführungsbeispiel der Erfindung.

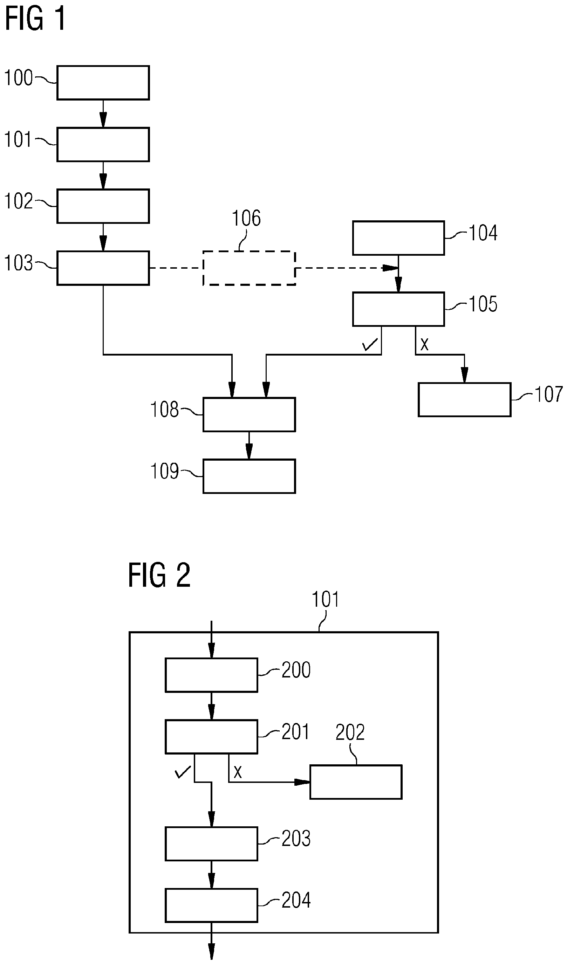

Figur 1 zeigt ein Arbeitsverfahren für ein Erkennungssystem gemäß einem Ausführungsbeispiel der Erfindung. Die im Folgenden beschriebenen Schritte werden bevorzugt in der angegebenen Reihenfolge ausgeführt. Es ist jedoch auch möglich, dass die beschriebenen Schritte in einer anderen Reihenfolge ausgeführt werden. In Schritt 100 wird von einem Nutzer mit einem Aufnahmegerät zunächst ein Farbbild aufgenommen. Das Farbbild zeigt einen ersten Bildausschnitt eine Bauteilanordnung, das eine Mehrzahl von Bauteilen umfasst, von denen Informationen, wie beispielsweise Typennummern, Bestellnummern, oder ähnliche, gewonnen werden soll.

Das Farbbild, das von dem Nutzer aufgenommen wird, zeigt in dem ersten Bildausschnitt eine vorbekannte Szene der Bauteilanordnung. Diese vorbekannte Szene muss nicht das Bauteil, das identifiziert werden soll, umfassen. Die vorbekannte Szene ist beispielsweise eine markante, eindeutige Schraubenanordnung, eine sonstige eindeutige Anordnung von Bauteilen, ein eindeutiger Schriftzug, oder ein eindeutiger Teil oder eine Gesamtansicht der Bauteilanordnung. Für den Fall, dass die Bauteilanordnung beispielsweise Teil eines Personenzugs ist, ist eine solche vorbekannte Szene beispielsweise ein eindeutiger Ausschnitt, in dem eine Tür und ein Fenster eine Wageneinheit zu sehen sind. Alternativ kann das Farbbild auch eine vorbekannte Szene ohne die Bauteilanordnung selbst umfassen, beispielsweise dann, wenn die Umgebung eindeutig eine Position und Ausrichtung der Bauteilanordnung festlegt.

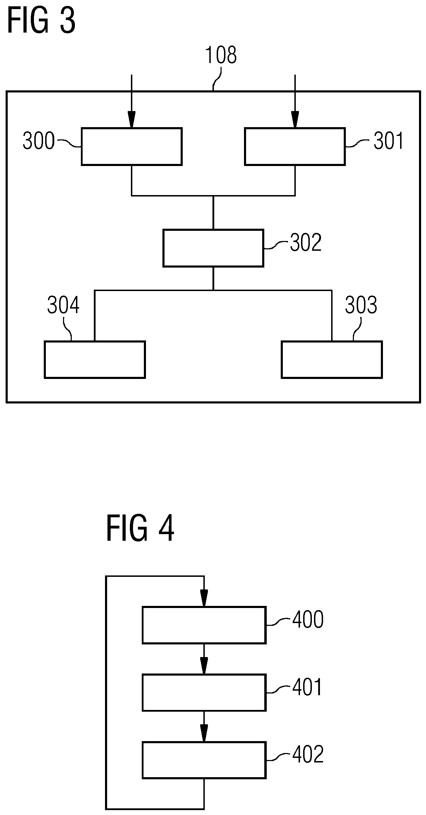

In einem weiteren Schritt 101 wird eine Ausgangspose des Aufnahmegeräts, mit dem das Farbbild aufgenommen wurde, bestimmt. Zur Bestimmung der Ausgangspose wird das in Schritt 100 aufgenommene Farbbild mit Referenzbildern abgeglichen, die mit einem 3D-Modell der Bauteilanordnung verknüpft sind. Die Referenzbilder sind ebenfalls Farbbilder eindeutiger, vorbekannter Szenen der Bauteilanordnung, die jeweils mit wenigstens drei Punktepaaren dem 3D-Modell zugeordnet sind. Die Referenzbilder und deren Verknüpfung mit dem 3D-Modell werden genauer mit Bezug auf Figur 4 beschrieben.

Wird eine ausreichende Übereinstimmung zwischen dem in Schritt 100 aufgenommene Farbbild mit einem der Referenzbilder gefunden, so wird über das passende Referenzbild und dessen Zuordnung zu dem 3D-Modell eine Ausgangspose des Aufnahmegeräts berechnet. Die Bestimmung der Ausgangspose wird genauer anhand von Figur 2 beschrieben.

Mit der berechneten Ausgangspose wird in Schritt 102 eine inertiale Messeinheit des Aufnahmegeräts initialisiert. Alle Translations- und Rotationsbewegungen des Aufnahmegeräts werden von der inertialen Messeinheit erfasst. Die inertiale Messeinheit aggregiert in Schritt 103 die erfassten Translations- bzw. Rotationsbewegungen auf die Ausgangspose, um zu jedem Zeitpunkt eine erste Pose des Aufnahmegeräts relativ zu dem 3D-Modell zu bestimmen. Hierbei werden Translationsbewegungen auf eine räumliche Position der Ausgangspose addiert. Für eine Bestimmung einer Blickrichtung der ersten Pose des Aufnahmegeräts werden Rotationsmatrizen der Ausgangspose und der erfassten Rotationsänderung multipliziert. Die kontinuierlich erfassten Translations- bzw. Rotationsbewegungen, aggregiert auf die Ausgangspose, bestimmen die erste Pose des Aufnahmegeräts. So wird beispielsweise die erste Pose des Aufnahmegeräts kontinuierlich während einer Bewegung berechnet, wenn sich der Nutzer mit dem Aufnahmegerät von dem Aufnahmepunkt, an dem er das Farbbild aufgenommen hat, an eine Stelle bewegt, an der er ein Bauteil der Bauteilanordnung identifizieren möchte.

Ist der Nutzer mit dem Aufnahmegerät an der Stelle angekommen, an der er ein Bauteil identifizieren möchte, so nimmt er in Schritt 104 ein 2,5D-Bild eines zweiten Bildausschnitts auf. Dieser zweite Bildausschnitt umfasst das zu identifizierende Bauteil. Das 2,5D-Bild umfasst sowohl Farbdaten, als auch Tiefendaten für jeden aufgenommenen Bildpunkt des zweiten Bildausschnitts. In Schritt 105 wird eine zweite Pose des Aufnahmegeräts relativ zu dem 3D-Modell bestimmt. Außerdem wird das 2,5D-Bild mit den Modelldaten des 3D-Modells abgeglichen. Hierzu eignet sich insbesondere ein Algorithmus zur iterativen Bestimmung nächster Punktnachbarn (engl.: iterative closest point algorithm, ICP). Alternativ oder zusätzlich kann ein Abgleich im Bildbereich verwendet werden, zum Beispiel über Pixelvergleiche.

Unterschiede in der Geometrie können somit identifiziert und extrahiert werden. Globale Unterschiede deuten darauf hin, dass die Erkennung der zweiten Pose fehlgeschlagen ist. Bei lokalen Unterschieden ist es möglich, über unterschiedliche Methoden, beispielsweise eine Segmentierung, zusammenhängende Regionen zu extrahieren. Dies weist beispielsweise auf Unterschiede zwischen dem 3D-Modell und der realen Anordnung hin. Die Schritte 104 und 105 sind ausführlich in der zum Zeitpunkt dieser Patentanmeldung noch nicht veröffentlichten Patentanmeldung mit dem Aktenzeichen PCT/US2017/041289 und der späteren Offenlegungsnummer WO 2019/013736 A1 beschrieben, deren Inhalt hiermit in diese Anmeldung einbezogen wird.

In einem optionalen Schritt 106, der nach der Bestimmung der ersten Pose in Schritt 103 und vor dem Schritt 105 durchgeführt werden kann, wird basierend auf der ersten Pose ein Teilbereich des 3D-Modells ausgewählt. Wird der Schritt 106 durchgeführt, so wird das in Schritt 104 aufgenommene 2,5D-Bild nur mit Modelldaten des bestimmten Teilbereichs abgeglichen. Auf diese Weise wird eine Beschleunigung des Abgleichs des 2,5D-Bildes mit den Modelldaten erzielt, da ein Suchbereich der Modelldaten für den Abgleich eingeschränkt wird.

Wird bei einem Abgleich des 2,5D-Bildes mit den Modelldaten des 3D-Modells keine oder nur eine teilweise Übereinstimmung gefunden, so wird in Schritt 107 dem Nutzer eine Warnung angezeigt. Diese Warnung kann beispielsweise darauf hinweisen, dass ein Abgleich des zweiten Bildausschnitts mit dem 3D-Modell fehlgeschlagen ist. Alternativ oder zusätzlich kann der Nutzer darauf hingewiesen werden, dass ein derartiger Abgleich nur teilweise erfolgreich war. Dies ist beispielsweise der Fall, wenn bei dem Abgleich ein Ausschnitt des 3D-Modells mit der größten Übereinstimmung aller Ausschnitte des gesamten 3D-Modells gefunden wurde, dieser Abgleich jedoch eine festgelegte maximale Abweichtoleranz zwischen dem 2,5D-Bild und dem gefundenen Ausschnitt des 3D-Modells überschreitet. Eine derartige Abweichtoleranz wird festgelegt, sodass Übereinstimmungen zwischen dem aufgenommenen 2,5D-Bild und den Modelldaten des 3D-Modells auch dann gefunden werden, wenn kleinere Abweichungen zwischen der realen Bauteilanordnung und dem 3D-Modell der Bauteilanordnung vorhanden sind.

Das Überschreiten der festgelegten maximalen Abweichtoleranz deutet beispielsweise darauf hin, dass zumindest Teile der Bauteilanordnung, die in dem zweiten Bildausschnitt aufgenommen wurde, verschmutzt oder so stark abgenutzt sind, dass das 2,5D-Bild von den Modelldaten abweicht. Außerdem kann dies darauf hinweisen, dass Bauteile, die in der Bauteilanordnung enthalten sind, in einem anderen Zustand eingebaut sind, als sie in dem 3D-Modell hinterlegt sind.

Ist die Bestimmung der zweiten Pose in Schritt 105 erfolgreich, so fährt das Erkennungssystem mit einem Schritt 108 fort. In diesem Schritt werden Bauteilinformationen über die in dem zweiten Bildausschnitt erkannten Bauteile ausgewertet. Der Schritt 108 wird ausführlich in dem Flussdiagramm gemäß Figur 3 beschrieben. Wurden die Bauteilinformationen von dem Erkennungssystem ausgewertet, so werden diese dem Nutzer in einem Schritt 109 auf eine Anzeigevorrichtung angezeigt. Diese Anzeige umfasst beispielsweise Identifizierungszeichen der erkannten Bauteile. Alternativ oder zusätzlich werden die Bauteilinformationen überlagert mit dem 2,5D-Bild des zweiten Bildausschnitts angezeigt. Für den Nutzer ist es so möglich, beispielsweise über ein online Bestellportal defekte oder abgenutzte Bauteile direkt nachzubestellen.

Figur 2 zeigt ein detailliertes Flussdiagramm der Bestimmung der Ausgangspose des Schritts 101 gemäß Figur 1. In Schritt 200 wird eine Funktion zur Erzeugung von Merkmalsvektoren auf das Farbbild mit dem ersten Bildausschnitt angewandt. So werden für verschiedenen Repräsentationslevels des Farbbilds, beispielsweise Kanten und Blobs, Merkmalsvektoren berechnet.

In Schritt 201 werden die berechneten Merkmalsvektoren mit Merkmalsvektoren der Referenzbilder verglichen. Da im Allgemeinen die Anzahl der Referenzbilder in dem 3D-Modell nicht sehr groß ist, reicht eine einfache Repräsentation aus. Beispielsweise werden Merkmalsvektoren über ein Bag-of-Words-Modell (BoW) quantisiert, um Übereinstimmungen zu erkennen. Dieses BoW-Modell ist zusammen mit den entsprechenden Zuordnungen der Referenzbilder zu dem 3D-Modell in einem Speicher abgelegt.

Wird in dem Schritt 201 keine ausreichende Übereinstimmung von Merkmalsvektoren gefunden, so erzeugt das Erkennungssystem in Schritt 202 eine Warnung, die den Nutzer beispielsweise darauf hinweist, dass er möglicherweise eine falsche Szene aufgenommen hat, eine vorbekannte Szene aufgenommen hat, die derart beschädigt oder verschmutzt ist, dass sie nicht erkannt werden kann, oder ein sonstiges Problem bei der Aufnahme der vorbekannten Szene vorliegt.

Wird in dem Schritt 201 eine ausreichende Übereinstimmung von Merkmalsvektoren gefunden, beispielsweise indem ein Schwellwert für eine erlaubte maximale Abweichung nicht überschritten wird, wird in Schritt 203 eine geometrische Transformation zwischen dem ersten Bildausschnitt und dem übereinstimmenden Referenzbild berechnet. Eine ausreichende Übereinstimmung von Merkmalsvektoren wird beispielsweise dadurch festgelegt, dass ein Schwellwert für eine erlaubte maximale Abweichung zwischen den in Schritt 200 berechneten Merkmalsvektoren und den Merkmalsvektoren der Referenzbilder definiert wird. Werden dann Übereinstimmungen der Merkmalsvektoren gefunden, die den Schwellwert nicht überschreiten, so wird dem aufgenommenen Farbbild ein entsprechendes Referenzbild zugeordnet, auch wenn die Übereinstimmung nicht absolut ist.

Bei der geometrischen Transformation, beispielsweise mit einer Homographie oder Relativposebestimmung, werden Abweichungen zwischen dem aufgenommenen ersten Bildausschnitt und dem übereinstimmenden Referenzbild bestimmt. Diese Abweichung kennzeichnet eine Abweichung zwischen der Pose des Aufnahmegeräts relativ zur vorbekannten Szene und einer Referenzpose relativ zu der vorbekannten Szene, aus der das entsprechende Referenzbild, welches dem 3D-Modell zugeordnet ist, aufgenommen wurde. Zur Bestimmung der Abweichungen zwischen dem aufgenommenen Farbbild mit dem ersten Bildausschnitt und dem Referenzbild werden automatisch bestimmte Punktkorrespondenzen zwischen dem Referenzbild und dem aufgenommenen Farbbild hergestellt. Hierzu eignet sich beispielsweise ein Abgleich der Ähnlichkeiten von Merkmalsvektoren der jeweiligen Bilder und robuste Inlier-Berechnung.

Basierend auf dieser geometrischen Transformation wird in Schritt 204 die Ausgangspose berechnet. Hierzu wird die berechnete Abweichung mit der Referenzpose des Referenzbildes aggregiert um die Ausgangspose des Aufnahmegeräts zu erhalten.

Figur 3 zeigt ein detailliertes Flussdiagramm der Auswertung von Bauteilinformationen gemäß Schritt 108 aus Figur 1. In einem Schritt 300 wird eine erste Teilansicht des 3D-Modells gerendert. Der erste Teilausschnitt wird basierend auf der ersten Pose ausgewählt. Die erste Pose wird hierfür im 3D-Modell lokalisiert und so der erste Teilausschnitt identifiziert, dem das Aufnahmegerät zugewandt ist.

In einem Schritt 301, der beispielsweise parallel zu dem Schritt 300 abläuft, wird ein zweiter zu rendernder Teilausschnitt identifiziert. Dies geschieht über den Abgleich des 2,5D-Bildes mit den Modelldaten des 3D-Modells. Daher kann dieser Schritt auch bereits zum Abgleich des 2,5D-Bildes mit den Modelldaten des 3D-Modells ablaufen. Die Modelldaten umfassen hierzu synthetisch aus dem 3D-Modell erzeugte 2,5D-Referenzansichten des 3D-Modells. Diese 2,5D-Referenzansichten des 3D-Modells sind zusammen mit dem 3D-Modell gespeichert. Die synthetisch erzeugten 2,5D-Referenzansichten werden beispielsweise so erzeugt, dass für jeden Teil der Bauteilanordnung eine 2,5D-Referenzansicht aus allen möglichen Blickwinkeln vorliegt. Die Blickwinkel sind hierfür quantisiert, beispielsweise in 5° Schritten. Die 2,5D-Referenzansichten des 3D-Modells, die eine Übereinstimmung mit dem aufgenommenen 2,5D-Bild ergeben haben, definieren den zu rendernden zweiten Teilausschnitt. Dies ist ebenfalls detailliert in der Patentanmeldung mit der Offenlegungsnummer WO 2019/013736 A1 beschrieben.

In einem Schritt 302 wird anschließend der erste gerenderte Teilausschnitt mit dem zweiten gerenderten Teilausschnitt verglichen. Hierbei werden Punktwolken des ersten gerenderten Teilausschnitts mit Punktwolken des zweiten gerenderten Teilausschnitts verglichen. Hierzu eignet sich insbesondere ein Algorithmus zur iterativen Bestimmung nächster Punktnachbarn (engl.: iterative closest point algorithm, ICP). Alternativ oder zusätzlich kann ein Abgleich im Bildbereich verwendet werden, zum Beispiel über Pixelvergleiche.

Unterschiede in der Geometrie können somit identifiziert und extrahiert werden. Globale Unterschiede deuten darauf hin, dass die Erkennung der zweiten Pose fehlgeschlagen ist. Ein entsprechender Warnhinweis wird in Schritt 303 an den Nutzer ausgegeben.

Werden keine wesentlichen Differenzen zwischen dem ersten und dem zweiten gerenderten Teilausschnitt vorgefunden, so wird in Schritt 304 die Bauteilinformation über die erkannten Bauteile an eine Anzeigevorrichtung gesendet.

Alternativ zu dem anhand von Figur 3 beschriebenen Ausführungsbeispiel werden Bauteilinformationen ohne das Rendern der ersten Teilansicht ausgewertet. Insbesondere, wenn lediglich die Beschleunigung des Abgleichs des 2,5D-Bildes mit Modelldaten des 3D-Modells durch das Einschränken des Suchbereichs der Modelldaten erzielt werden soll, d.h. der anhand von Figur 1 beschriebene Schritt 106 durchgeführt wird, wird auf das Rendern der ersten Teilansicht und den Abgleich der ersten gerenderten Teilansicht mit der zweiten gerenderten Teilansicht verzichtet. In diesem Fall wird die Bauteilinformation basierend auf der zweiten gerenderten Teilansicht ausgewertet. Dies ist ebenfalls ausführlich in der Patentanmeldung mit der Veröffentlichungsnummer WO 2019/013736 A1 beschrieben.

Figur 4 zeigt ein Flussdiagramm eines Trainingsverfahrens zum Erzeugen eines 3D-Modells mit Referenzdaten. Das 3D-Modell der Bauteilanordnung selbst ist auf einem Speicher gespeichert. Das 3D-Modell ist beispielsweise ein CAD-Modell der Bauteilanordnung. Dieses Trainingsverfahren kann insbesondere für ein Erkennungssystem verwendet werden, dessen Arbeitsverfahren in den Figuren 1 bis 3 gezeigt ist.

In einem ersten Schritt 400 wird mit einem Aufnahmegerät ein Farbbild einer markanten Szene einer Bauteilanordnung aufgenommen. Eine derartige markante Szene ist vorzugsweise keiner wesentlichen Verschmutzung und keiner wesentlichen Abnutzung ausgesetzt. Ferner ist die markante Szene eindeutig, sodass die markante Szene kein zweites Mal an der Bauteilanordnung vorzufinden ist. Alternativ oder zusätzlich können derartige markante Szenen auch relevante QR- oder Barcodes enthalten. In einem nächsten Schritt 401 wird das aufgenommene Farbbild in das 3D-Modell eingehängt. Hierzu werden mindestens drei Punkte in dem Farbbild drei entsprechenden Punkten in dem 3D-Modell zugeordnet. Dies wird beispielsweise manuell durch einen Nutzer durchgeführt. Auf diese Weise ist eine Pose des Farbbildes absolut zum 3D-Modell bestimmt und internen Kalibrierungsparametern des 3D-Modells zugeordnet. Die markante Szene, die mit dem Farbbild aufgenommen wurde, stellt eine vorbekannte Szene dar, die bei dem Arbeitsverfahren des Erkennungssystems ein Nutzer mit einem Farbbild aufnehmen muss, um eine Ausgangspose zu bestimmen.

Anschließend wird in einem Schritt 402 das Farbbild als Referenzbild mit den jeweiligen Punktepaaren, die das Farbbild in dem 3D-Modell festlegen, in einem Speicher abgelegt.

Die Schritte 400 bis 402 können beliebig oft wiederholt werden, um eine beliebige Anzahl von Referenzbildern in das 3D-Modell einzuhängen.

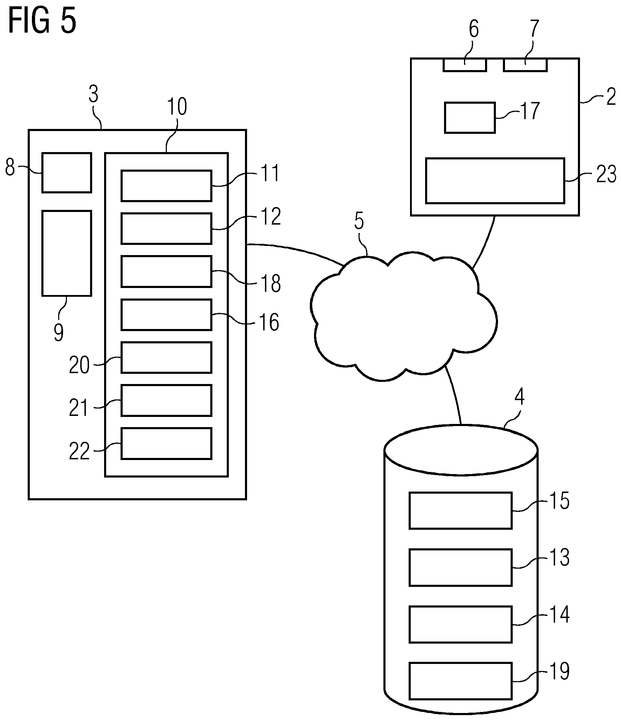

Figur 5 zeigt eine schematische Anordnung eines Erkennungssystem 1 gemäß einem Ausführungsbeispiel der Erfindung. Das Erkennungssystem 1 eignet sich insbesondere dazu, um mit dem Arbeitsverfahren gemäß der Figuren 1 bis 3 betrieben zu werden. Bei der Beschreibung des Erkennungssystems 1 gemäß Figur 5 wird insbesondere auf Elemente eingegangen, die zur Bestimmung einer ersten Pose verwendet werden. Weitere Elemente des Erkennungssystems 1, die beispielsweise zur Bestimmung einer zweiten Pose und zur Auswertung der zweiten Pose, sowie zur Auswertung von Bauteilinformationen verwendet werden, werden hier nicht ausführlich beschrieben. Diese sind ebenfalls in der Patentanmeldung mit der Veröffentlichungsnummer WO 2019/013736 A1 beschrieben.

Das Erkennungssystem 1 besteht aus einem mobilen Aufnahmegerät 2, einem Server 3 und einem Datenspeicher 4. Datenspeicher 4, Server 3 und mobiles Aufnahmegerät 2 sind jeweils über ein Netzwerk 5 miteinander verbunden. Das Aufnahmegerät 2 weist einen Farbsensor 6 sowie einen Tiefensensor 7 auf. Der Farbsensor 6 ist beispielsweise Teil einer RGB-Kamera, der Tiefensensor 7 beispielsweise Teil eines Time-of-Flight (ToF) Sensors zur Distanzbestimmung. Der Farbsensor 6 und der Tiefensensor 7 sind dazu eingerichtet, 2,5D-Bilder einer der Bauteilanordnung aufzunehmen. Die von den Sensoren 6, 7 aufgenommenen 2,5D-Bilder werden über das Netzwerk 5 an den Server 3 gesendet.

Der Server 3 weist einen Prozessor 8 und einen Arbeitsspeicher 9 auf. Prozessor 9 und Arbeitsspeicher 8 werden dazu verwendet, die von dem Aufnahmegerät 2 erhaltenen 2,5D-Bilder auszuwerten. Hierfür sind in einer Speichervorrichtung 10 des Servers 3 verschiedene Softwaremodule gespeichert. Benötigte Softwaremodule werden von den Prozessor 9 in den Arbeitsspeicher 8 geladen.

Zunächst wird aus der Speichervorrichtung 10 ein Mapping-Modul 11 aufgerufen. Das Mapping-Modul wertet in diesem Ausführungsbeispiel nur die Farbdaten des 2,5D-Bildes aus, sodass die Tiefendaten des 2,5D-Bildes nicht berücksichtigt oder gelöscht werden. Übrig bleibt ein Farbbild, basierend auf den Farbdaten des 2,5D-Bildes. Das Mapping-Modul 11 ist dazu eingerichtet, Merkmalsvektoren des Farbbildes zu berechnen.

Anschließend wird von dem Prozessor 9 ein Abgleichmodul 12 in den Arbeitsspeicher 8 geladen. Das Abgleichmodul 12 ist dazu eingerichtet, die Merkmalsvektoren des Farbbildes mit Merkmalsvektoren der auf dem Datenspeicher 4 gespeicherten Referenzbilder 13 zu vergleichen. Der Abgleich wird beispielsweise mit dem sogenannten Bag-of-Words-Modell durchgeführt. Die Referenzbilder 13 sind auf dem Datenspeicher 4 mit entsprechenden Referenzposen 14 gespeichert. Über die Referenzposen 14 lassen sich die Referenzbilder 13 einer Pose in dem zugehörigen 3D-Modell 15 der Bauteilanordnung zuordnen.

Findet das Abgleichmodul 12 ein mit dem Farbbild ausreichend übereinstimmendes Referenzbild 13, so wird das entsprechende Referenzbild 13 mit der zugehörigen Referenzpose 14 in den Arbeitsspeicher 8 geladen. Anschließend wird ein Transformationsmodul 16 auf das Farbbild und das zugehörige Referenzbild 13 angewendet. Das Transformationsmodul 16 berechnet eine geometrische Transformation zwischen dem Farbbild und dem zugehörigen Referenzbild 13. Die von dem Transformationsmodul 16 berechnete geometrische Transformation wird auf die zu dem Referenzbild 13 gehörende Referenzpose 14 aggregiert. Die Aggregation aus Referenzpose 14 und der geometrischen Transformation stellt eine Ausgangspose des mobilen Aufnahmegeräts 2 relativ zu dem 3D-Modell 15 dar. Diese Ausgangspose wird von dem Server 3 über das Netzwerk 5 an das mobile Aufnahmegerät 2 gesendet.

Das mobile Aufnahmegerät 2 umfasst außerdem eine inertiale Messeinheit 17 (englisch: inertial measure unit, IMU), die mit der Ausgangspose initialisiert wird.

Alle Translationsbewegungen und Rotationsbewegungen, die das mobile Aufnahmegerät 2 anschließend durchführt, werden von der inertialen Messeinheit 17 erfasst. Die inertiale Messeinheit 17 aggregiert die erfassten Rotations- bzw. Translationsbewegungen auf die Ausgangspose. Auf diese Weise erzeugt die inertiale Messeinheit 17 ein Pose-Tracking-Signal, welches über das Netzwerk 5 an den Server 3 gesendet wird.

Auf der Speichervorrichtung 10 des Servers 3 befindet sich außerdem ein erstes Posebestimmungsmodul 18, welches dazu eingerichtet ist, das von dem mobilen Aufnahmegerät 2 empfangene Pose-Tracking-Signal auszuwerten und so eine erste Pose des mobilen Aufnahmegeräts 2 zu bestimmen.

In einem alternativen Ausführungsbeispiel wird die Ausgangspose auf dem Server 3 berechnet und nicht an das Aufnahmegerät 2 gesendet. In diesem Fall erfasst die inertiale Messeinheit 17 Rotations- bzw. Translationsbewegungen des Aufnahmegeräts und sendet ein relatives Pose-Tracking-Signal basierend auf den erfassten Bewegungen an den Server 3. In diesem Fall ist das erste Posebestimmungsmodul 18 dazu eingerichtet, das relative Pose-Tracking-Signal auszuwerten und die von der inertialen Messeinheit 17 erfassten Bewegungen auf die Ausgangspose zu aggregieren, um die erste Pose des Aufnahmegeräts zu bestimmen.

Alternativ zur Bestimmung der ersten Pose mit der inertialen Messeinheit 17 kann auch ein anderes Indoor-Navigationssystem verwendet werden, um das Pose-Tracking-Signal zu erzeugen.

Außerdem ist auf der Speichervorrichtung 10 ein zweites Posebestimmungsmodul 20 gespeichert, welches dazu eingerichtet ist, eine zweite Pose des mobilen Aufnahmegeräts 2 zu bestimmen, basierend auf einem Abgleich eines mit dem Aufnahmegerät 2 aufgenommenen 2,5D-Bilds mit synthetisch erzeugten 2,5D-Referenzansichten 19, die beispielsweise auf dem Datenspeicher 4 gespeichert sind.

Auf der Speichervorrichtung 10 ist des Weiteren ein Render-Modul 21 gespeichert, das dazu eingerichtet ist, Teilansichten des 3D-Modells zu rendern und ein Auswertungsmodul 22 gespeichert, das dazu eingerichtet ist, Bauteilinformationen von in den gerenderten Teilansichten erkannten Bauteilen auszuwerten. Die Ausgewerteten Bauteilinformationen werden dann von dem Server 3 über das Netzwerk 5 an das Aufnahmegerät 2 gesendet. Das Aufnahmegerät 2 weist ein Display 23 auf, über das dem Nutzer die Bauteilinformationen und/oder Warnungen gemäß dem oben beschriebenen Verfahren angezeigt werden.

Diese und weitere Elemente des Erkennungssystems 1 und deren Funktionen sind außerdem ausführlich beschrieben in der Patentanmeldung mit dem Aktenzeichen PCT/US2017/041289 und der Veröffentlichungsnummer WO 2019/013736 A1.

In einem alternativen Ausführungsbeispiel des Erkennungssystems 1 ist der Datenspeicher in dem Server 3 integriert. In einem weiteren alternativen Ausführungsbeispiel des Erkennungssystems 1 sind die Elemente des Servers 3 vollständig oder teilweise in dem mobilen Aufnahmegerät 2 integriert. In einem weiteren alternativen Ausführungsbeispiel sind die Elemente des Servers 3 und des Datenspeichers 4 teilweise oder vollständig in dem mobilen Aufnahmegerät 2 integriert.

## Patentansprüche

1. Arbeitsverfahren umfassend die Schritte:
- Bestimmen einer Ausgangspose eines Aufnahmegeräts (2) relativ zu einem 3D-Modell (15) einer Bauteilanordnung, wobei bei der Bestimmung der Ausgangspose ein erster Bildausschnitt mit dem Aufnahmegerät (2) aufgenommen wird und mit wenigstens einem in dem 3D-Modell (15) hinterlegten Referenzbild (13) abgeglichen wird,
- Erzeugen eines Pose-Tracking-Signals, ausgehend von der Ausgangspose, basierend auf erfassten Translations- und/oder Rotationsbewegungen des Aufnahmegeräts (2),
- Aufnehmen eines zweiten Bildausschnitts, wobei der zweite Bildausschnitt wenigstens ein zu erkennendes Bauteil der Bauteilanordnung umfasst,
- Bestimmen einer ersten Pose des Aufnahmegeräts (2) relativ zu dem 3D-Modell (15), basierend auf dem Pose-Tracking-Signal,
- Bestimmen einer zweiten Pose des Aufnahmegeräts (2) relativ zu dem 3D-Modell, basierend auf einem Abgleich des zweiten Bildausschnitts mit Modelldaten des 3D-Modells (15), **gekennzeichnet durch** folgende Verfahrensschritte:
- Auswerten wenigstens einer Bauteilinformation des wenigstens einen zu erkennenden Bauteils basierend auf der ersten Pose und der zweiten Pose, wenn der Abgleich des zweiten Bildausschnitts mit den Modelldaten erfolgreich ist,
- Erzeugen eines Warnsignals, wenn der Abgleich des zweiten Bildausschnitts mit den Modelldaten zumindest teilweise nicht erfolgreich ist.

2. Arbeitsverfahren gemäß Anspruch 1, wobei das Bestimmen der zweiten Pose ferner ein Bestimmen eines Teilbereichs des 3D-Modells (15) basierend auf der ersten Pose umfasst.

3. Arbeitsverfahren gemäß einem der Ansprüche 1 oder 2, ferner umfassend:
- Rendern einer ersten Teilansicht des 3D-Modells (15) basierend auf der ersten Pose,
- Rendern einer zweiten Teilansicht des 3D-Modells (15) basierend auf der zweiten Pose,
- Abgleichen der ersten gerenderten Teilansicht mit der zweiten gerenderten Teilansicht,
- Erzeugen eines weiteren Warnsignals, wenn ein Abgleich der ersten und der zweiten gerenderten Teilansicht zumindest teilweise nicht erfolgreich ist.

4. Arbeitsverfahren gemäß einem der Ansprüche 1 bis 3, wobei beim Aufnehmen des ersten Bildausschnitts ein Farbbild einer eindeutigen, vorbekannten Szene der Bauteilanordnung aufgenommen und/oder ein an einer eindeutigen Stelle der Bauteilanordnung angebrachter Barcode und/oder QR-Code gescannt wird, und wobei das Referenzbild (13) eine entsprechende Referenz-Bild-Information und/oder Referenz-Barcode-Information und/oder QR-Code Information umfasst.

5. Arbeitsverfahren gemäß einem der Ansprüche 1 bis 4, wobei beim Bestimmen der Ausgangspose des Aufnahmegeräts (2) eine geometrische Transformation zwischen dem ersten Bildausschnitt und dem Referenzbild (13) berechnet wird.

6. Arbeitsverfahren gemäß einem der Ansprüche 1 bis 5, wobei mit dem ersten Bildausschnitt zusätzlich ein Produkttyp eines die Bauteilanordnung umfassenden Produkts identifiziert wird.

7. Erkennungssystem (1), umfassend wenigstens ein Aufnahmegerät (2), eine Pose-Tracking-Vorrichtung und wenigstens eine Datenverarbeitungsvorrichtung sowie eine Anzeigevorrichtung, wobei
- das Aufnahmegerät (2) dazu eingerichtet ist, einen ersten Bildausschnitt aufzunehmen,
- die wenigstens eine Datenverarbeitungsvorrichtung dazu eingerichtet ist, eine Ausgangspose des Aufnahmegeräts (2) relativ zu einem 3D-Modell (15) einer Bauteilanordnung zu bestimmen, wobei bei der Bestimmung der Ausgangspose der erste Bildausschnitt mit einem in dem 3D-Modell hinterlegten Referenzbild (13) abgeglichen wird,
- die Pose-Tracking-Vorrichtung dazu eingerichtet ist, ein Pose-Tracking-Signal, ausgehend von der Ausgangspose, basierend auf erfassten Translations- und/oder Rotationsbewegungen des Aufnahmegeräts (2) zu erzeugen,
- das wenigstens eine Aufnahmegerät (2) ferner dazu eingerichtet ist, einen zweiten Bildausschnitt aufzunehmen, wobei der zweite Bildausschnitt wenigstens ein zu erkennendes Bauteil der Bauteilanordnung umfasst,
- die wenigstens eine Datenverarbeitungsvorrichtung ferner dazu eingerichtet ist, eine erste Pose des Aufnahmegeräts (2) relativ zu dem 3D-Modell (15), basierend auf dem Pose-Tracking-Signal zu bestimmen,
- die wenigstens eine Datenverarbeitungsvorrichtung ferner dazu eingerichtet ist, eine zweite Pose des Aufnahmegeräts (2) relativ zu dem 3D-Modell (15), basierend auf einem Abgleich des zweiten Bildausschnitt mit Modelldaten des 3D-Modells (15) zu bestimmen,
**dadurch gekennzeichnet, dass**
- die wenigstens eine Datenverarbeitungsvorrichtung ferner dazu eingerichtet ist, wenigstens eine Bauteilinformation des wenigstens einen zu erkennenden Bauteils, basierend auf der ersten Pose und der zweiten Pose auszuwerten, wenn der Abgleich des zweiten Bildausschnitts mit den Modelldaten erfolgreich ist,
- die Anzeigevorrichtung dazu eingerichtet ist, wenigstens eine Bauteilinformation auszugeben, wenn der Abgleich des zweiten Bildausschnitts mit den Modelldaten erfolgreich ist, und ein Warnsignal anzuzeigen, wenn der Abgleich des zweiten Bildausschnitts mit den Modelldaten zumindest teilweise nicht erfolgreich ist.

8. Erkennungssystem (1) gemäß Anspruch 7, wobei das wenigstens eine Aufnahmegerät (2) einen Farbsensor und einen Tiefensensor umfasst.

9. Erkennungssystem (1) gemäß einem der Ansprüche 7 oder 8, wobei die Pose-Tracking-Vorrichtung eine inertiale Messeinheit (17) zur Erzeugung des Pose-Tracking-Signals umfasst und die inertiale Messeinheit (17) in dem Aufnahmegerät (2) integriert ist.

## Claims

1. Work method comprising the following steps:
- determining an initial pose of a recording device (2) relative to a 3D model (15) of a component arrangement, wherein the determination of the initial pose involves a first image detail being recorded by the recording device (2) and being compared with at least one reference image (13) stored in the 3D model (15),
- generating a pose tracking signal, proceeding from the initial pose, on the basis of detected translational and/or rotational movements of the recording device (2),
- recording a second image detail, wherein the second image detail comprises at least one component to be recognized of the component arrangement,
- determining a first pose of the recording device (2) relative to the 3D model (15), on the basis of the pose tracking signal,
- determining a second pose of the recording device (2) relative to the 3D model, on the basis of a comparison of the second image detail with model data of the 3D model (15),
**characterized by** the following method steps:
- evaluating at least one item of component information of the at least one component to be recognized on the basis of the first pose and the second pose if the comparison of the second image detail with the model data is successful,
- generating a warning signal if the comparison of the second image detail with the model data is at least partly not successful.

2. Work method according to Claim 1, wherein determining the second pose furthermore comprises determining a partial region of the 3D model (15) on the basis of the first pose.

3. Work method according to either of Claims 1 and 2, furthermore comprising:
- rendering a first partial view of the 3D model (15) on the basis of the first pose,
- rendering a second partial view of the 3D model (15) on the basis of the second pose,
- comparing the first rendered partial view with the second rendered partial view,
- generating a further warning signal if a comparison of the first and second rendered partial views is at least partly not successful.

4. Work method according to any of Claims 1 to 3, wherein, when recording the first image detail, a colour image of a unique, previously known scene of the component arrangement is recorded and/or a barcode and/or QR code attached to a unique location of the component arrangement are/is scanned, and wherein the reference image (13) comprises corresponding reference image information and/or reference barcode information and/or QR code information.

5. Work method according to any of Claims 1 to 4, wherein a geometric transformation between the first image detail and the reference image (13) is calculated when determining the initial pose of the recording device (2).

6. Work method according to any of Claims 1 to 5, wherein a product type of a product comprising the component arrangement is additionally identified by the first image detail.

7. Recognition system (1), comprising at least one recording device (2), a pose tracking device and at least one data processing device and also a display device, wherein
- the recording device (2) is configured to record a first image detail,
- the at least one data processing device is configured to determine an initial pose of the recording device (2) relative to a 3D model (15) of a component arrangement, wherein the determination of the initial pose involves the first image detail being compared with a reference image (13) stored in the 3D model,
- the pose tracking device is configured to generate a pose tracking signal, proceeding from the initial pose, on the basis of detected translational and/or rotational movements of the recording device (2),
- the at least one recording device (2) is furthermore configured to record a second image detail, wherein the second image detail comprises at least one component to be recognized of the component arrangement,
- the at least one data processing device is furthermore configured to determine a first pose of the recording device (2) relative to the 3D model (15), on the basis of the pose tracking signal,
- the at least one data processing device is furthermore configured to determine a second pose of the recording device (2) relative to the 3D model (15), on the basis of a comparison of the second image detail with model data of the 3D model (15), **characterized in that**
- the at least one data processing device is furthermore configured to evaluate at least one item of component information of the at least one component to be recognized on the basis of the first pose and the second pose if the comparison of the second image detail with the model data is successful,
- the display device is configured to output at least one item of component information if the comparison of the second image detail with the model data is successful, and to display a warning signal if the comparison of the second image detail with the model data is at least partly not successful.

8. Recognition system (1) according to Claim 7, wherein the at least one recording device (2) comprises a colour sensor and a depth sensor.

9. Recognition system (1) according to either of Claims 7 and 8, wherein the pose tracking device comprises an inertial measurement unit (17) for generating the pose tracking signal and the inertial measurement unit (17) is integrated in the recording device (2).

## Revendications

1. Procédé de travail comprenant les stades :
- détermination d'une pose initiale d'un appareil (2) d'enregistrement par rapport à un modèle (15) en 3D d'un agencement de pièce, dans lequel, lors de la détermination de la pose initiale, on enregistre une première coupe d'image par l'appareil (2) d'enregistrement et on égalise à au moins une image (13) de référence mise en mémoire dans le modèle (15) en 3D,
- production d'un signal de tracking de pose, à partir de la pose initiale, reposant sur des mouvements relevés de translation et/ou de rotation de l'appareil (2) d'enregistrement,
- enregistrement d'une deuxième coupe d'image, la deuxième coupe d'image comprenant au moins une pièce à reconnaître de l'agencement de pièce,
- détermination d'une première pose de l'appareil (2) d'enregistrement par rapport au modèle (15) en 3D, reposant sur le signal de tracking de pose,
- détermination d'une deuxième pose de l'appareil (2) d'enregistrement par rapport au modèle en 3D, reposant sur une égalisation de la deuxième coupe d'image à des données du modèle (15) en 3D,
**caractérisé par** les stades de procédé suivants :
- analyse d'au moins une information sur la au moins une pièce à reconnaître, reposant sur la première pose et la deuxième pose, si l'égalisation de la deuxième coupe d'image aux données du modèle est couronnée de succès,
- production d'un signal d'alerte, si l'égalisation de la deuxième coupe d'image aux données du modèle n'est, au moins en partie, pas couronnée de succès.

2. Procédé de travail suivant la revendication 1, dans lequel la détermination de la deuxième pose comprend en outre une détermination d'une région partielle du modèle (15) en 3D, reposant sur la première pose.

3. Procédé de travail suivant l'une des revendications 1 ou 2, comprenant en outre :
- rendu d'une première vue partielle du modèle (15) en 3D, reposant sur la première pose,
- rendu d'une deuxième vue partielle du modèle (15) en 3D, reposant sur la deuxième pose,
- égalisation de la première vue partielle rendue à la deuxième vue partielle rendue,
- production d'un autre signal d'alerte, si une égalisation de la première et de la deuxième vue partielle rendue n'est, au moins en partie, pas couronnée de succès.

4. Procédé de travail suivant l'une des revendications 1 à 3, dans lequel, lors de l'enregistrement de la première coupe d'image, on prend une image en couleur d'une scène univoque connue à l'avance de l'agencement de pièce et/ou on scanne un code barre et/ou un code QR mis en un endroit univoque de l'agencement de pièce et, dans lequel l'image (13) de référence comprend une information d'image de référence correspondante et/ou une information de code barre de référence et/ou une information de code QR.

5. Procédé de travail suivant l'une des revendications 1 à 4, dans lequel, lors de la détermination de la pose initiale de l'appareil (2) d'enregistrement, on calcule une transformation géométrique entre la première coupe d'image et l'image (13) de référence.

6. Procédé de travail suivant l'une des revendications 1 à 5, dans lequel on identifie à la première coupe d'image en outre un type d'un produit comprenant l'agencement de pièce.

7. Système (1) de reconnaissance, comprenant au moins un appareil (2) d'enregistrement, un dispositif de tracking de pose et au moins un dispositif de traitement de données ainsi qu'un dispositif indicateur, dans lequel
- l'appareil (2) d'enregistrement est conçu pour prendre une première coupe d'image,
- le au moins un dispositif de traitement de données est conçu pour déterminer une pose initiale de l'appareil (2) d'enregistrement par rapport à un modèle (15) en 3D d'un agencement de pièce, dans lequel, lors de la détermination de la pose initiale, on égalise la première coupe d'image à une image (13) de référence mise en mémoire dans le modèle en 3D,
- le dispositif de tracking de pose est conçu pour produire un signal de tracking de pose à partir de la pose initiale, reposant sur des mouvements relevés de translation et/ou de rotation de l'appareil (2) d'enregistrement,
- le au moins un appareil (2) d'enregistrement est conçu en outre pour prendre une deuxième coupe d'image, la deuxième coupe d'image comprenant au moins une pièce à reconnaître de l'agencement de pièce,
- le au moins un dispositif de traitement de données est conçu en outre pour déterminer une première pose de l'appareil (2) d'enregistrement par rapport au modèle (15) en 3D, reposant sur le signal de tracking de pose,
- le au moins un dispositif de traitement de données est conçu en outre pour déterminer une deuxième pose de l'appareil (2) d'enregistrement par rapport au modèle (15) en 3D, reposant sur une également de la deuxième coupe d'image à des données du modèle (15) en 3D,
**caractérisé en ce que**
- le au moins un dispositif de traitement de données est conçu en outre pour analyser au moins une information de la au moins une pièce à reconnaître, reposant sur la première pose et la deuxième pose, si l'égalisation de la deuxième coupe d'image aux données du modèle est couronnée de succès,
- le dispositif d'indication est conçu pour émettre au moins une information de pièce, si l'égalisation de la deuxième coupe d'image aux données du modèle est couronnée de succès et pour indiquer un signal d'alerte si l'égalisation de la deuxième d'image aux données du modèle n'est, au moins en partie, pas couronnée de succès.

8. Système (1) de reconnaissance suivant la revendication 7, dans lequel le au moins un appareil (2) d'enregistrement comprend un capteur de couleur et un capteur de profondeur.

9. Système (1) de reconnaissance suivant l'une des revendications 7 ou 8, dans lequel le dispositif de tracking de pose comprend une unité (17) de mesure inertielle de production du signal de tracking de pose et l'unité (17) de mesure inertielle est intégrée à l'appareil (2) d'enregistrement.
